# EUROPÄISCHE PATENTANMELDUNG

(11) **EP 0 544 619 A1**
(43) Veröffentlichungstag der Anmeldung: **02.06.1993**
(21) Anmeldenummer: 92810899.2
(22) Anmeldetag: 18.11.1992
(51) Int. Cl.: A01N 57/34, C09D 5/14, C08K 5/50

(54) **Schutz nicht-wässriger Systeme mit Bioziden**

(30) Priorität: 27.11.1991 CH 3472/91
(71) Anmelder: CIBA-GEIGY AG, CH-4002 Basel (CH)
(72) Erfinder: Grade, Reinhardt, W-6140 Bensheim (DE); Lorenz, Joachim, Dr., W-6140 Bensheim 3 (DE)

(57) **Zusammenfassung**

Nicht-wässrige und nicht-wasserlösliche technische Materialien werden stabilisiert und gegen Befall durch Schadorganismen geschützt, indem Phosphoniumchloride der Formel I 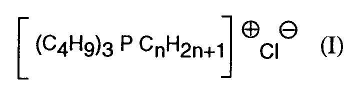
worin n für eine Zahl von 8 - 16 steht, in das zu stabilisierende System eingearbeitet werden.

## Beschreibung

Die Erfindung betrifft ein Verfahren zum Stabilisieren nicht-wässriger Systeme gegen Befall durch Schadorganismen mittels Phosphoniumchloriden.

Phosphoniumchloride besitzen mikrobiologische Wirksamkeit. So ist z.B. aus der EP-B-0 066 544 ein Verfahren zur Wasseraufbereitung bekannt, worin Phosphoniumhalogenide als Biozide eingesetzt werden. Die Verwendung von nicht hygroskopischen Phosphoniumtetrafluoroboraten oder Phosphoniumhexafluorophosphaten als Biozide im technischen Materialschutz wird in der EP-A-0 332 578 beschrieben. Antiseptische Detergentien-Zusammensetzungen, enthaltend Phosphoniumhalogenide sind in der US-A-3,281,365 veröffentlicht.

Es besteht weiterhin ein Bedarf nicht-wässrige Systeme wirksam gegen den Befall durch Schadorganismen zu schützen.

Es wurde nun überraschenderweise gefunden, dass sich bestimmte Alkyl-tributylphosphoniumchloride, obwohl sie, im Gegensatz zu den entsprechenden Tetrafluoroboraten, hygroskopische Eigenschaften besitzen und unbegrenzt wasserlöslich sind, hervorragend zum Schützen nicht-wässriger Systeme eignen.

Gegenstand der Erfindung ist also ein Verfahren zum Stabilisieren von nicht-wässrigen und nicht-wasserlöslichen technischen Materialien gegen Befall durch Schadorganismen dadurch gekennzeichnet, dass man Phosphoniumchloride der Formel I 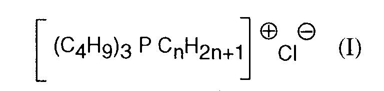
worin n für eine Zahl von 8 - 16 steht, in das zu stabilisierende System einarbeitet.

Der CₙH₂ₙ₊₁-Rest an Phosphoratom kann linear oder verzweigt sein und beispielsweise Octyl, Nonyl, Decyl, Dodecyl, Tetradecyl, Pentadecyl oder Hexadecyl bedeuten.

Die Herstellung der im erfindungsgemässen Verfahren verwendeten Biozide ist dem Fachmann geläufig und beispielsweise der US Patentschrift 3,281,365 zu entnehmen. So können die Verbindungen z.B. durch Alkylierung von tertiären Phosphinen mit Alkylhalogeniden erhalten werden: 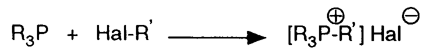
Andere Herstellungsmöglichkeiten sind die Alkylierung von Phosphanen (auch sekundären und tertiären) oder elementarem Phosphor. (Vgl. Houben-Weyl, Methoden der Organischen Chemie, Bd. XII,1, Seite 79, Georg Thieme Verlag, Stuttgart, 1963, sowie Houben-Weyl, Methoden der Organischen Chemie, Bd. E, 1, Seite 491 ff, Georg Thieme Verlag, Stuttgart, 1982.)

Es ist vorteilhaft die Verbindungen der Formel I, gegebenenfalls unmittelbar nach der Herstellung, in einem organischen Lösemittel oder Lösemittelgemisch zu lösen und in das zu stabilisierende Material einzuarbeiten. Solche Lösungen enthalten die Verbindungen der Formel I zweckmäßig in hoher Konzentration; beispielsweise sind 30-80 Gew.-%, vorzugsweise 40-70, vor allem 45-60 Gew.-% der Phosphoniumverbindung in der Lösung enthalten.
Werden solche Lösungen von Bioziden der Formel I beispielsweise in Antifoulingfarben eingearbeitet, ist es zweckmässig, ein Lösemittel oder Lösemittelgemisch zu verwenden, das mit dem identisch ist, welches auch für das Anstrichsystem eingesetzt wird. Es ist nicht nötig das jeweilige Lösemittel wieder aus der Formulierung zu entfernen, sondern es verdampft bei der Trocknung der fertigen Farbe.

Unter für das erfindungsgemässe Verfahren geeigneten Lösemitteln sind beispielsweise aromatische Kohlenwasserstoffe wie Toluol oder Xylol zu verstehen. Weiterhin können hochsiedende Mineralöle oder als Lacklösemittel übliche Produkte, beispielsweise Ketone oder Ester wie z.B. Butylacetat oder Polyglycole verwendet werden.
Geeignet sind vor allem solche Lösemittel, worin die Verbindungen der Formel I zu mindestens 40, insbesondere 50 % löslich sind.

Die Verbindungen der Formel I entfallen besonders hohe Wirksamkeit gegenüber Schadorganismen, die technische Materialien befallen.

Als Beispiele für Materialien, die durch das erfindungsgemässe Verfahren geschützt werden können, seien beispielsweise Kunststoffe, Ueberzüge (z.B. Lacke), Farben (Farbstofformulierungen), Gummi und Klebstoffe genannt.

Besonders zweckmässig ist die Verwendung der Biozide der Formel I für Kunststoffe, Anstrichfarben und Lacke insbesondere für Aussenanstrichfarben, vor allem aber auch für Antifoulingfarben.

Werden Farben (Anstrichformulierungen) geschützt, handelt es sich dabei vorzugsweise um Antifoulingfarben. Diese enthalten beispielsweise als Bindemittel die dem Fachmann bekannten Lackrohstoffe, wie natürliche und synthetische Harze, homo- und copolymere Produkte mit den Monomeren Vinylchlorid, Vinylidenchlorid, Styrol, Vinyltoluol, Vinylestern, Vinylalkoholen, Acrylsäure und Methacrylsäure, sowie deren Estern, Polyester- und Polyamidharze, ferner Chlorkautschuk, natürlicher und synthetischer Kautschuk, gegebenenfalls chloriert oder cyclisiert, auch Reaktionsharze, wie Epoxidharze, Polyurethanharze, ungesättigte Polyester, die gegebenenfalls durch Zusatz von Härtern in filmbildende, höhermolekulare Produkte übergeführt werden können.

Die Bindemittel können flüssig sein oder in gelöster Form vorliegen. Feste Beschichtungsmittel können z.B. im Pulverbeschichtungsverfahren auf Gegenstände aufgebracht werden. Weitere übliche Grundstoffe sind z.B. Teer, Modifikatoren, Farbstoffe, anorganische oder organische Pigmente, Füllstoffe und Härter.

Das erfindungsgemässe Verfahren gelangt insbesondere überall dort zur Anwendung, wo Objekte, welche gegen den Bewuchs durch Pilze und Algen und Befall durch Balaniden, Bryocoen, Hydroiden, Mollusken, Protozoen, Muscheln und Bakterien geschützt werden sollen, dem Wasser, insbesondere Meerwasser, ausgesetzt sind. Es handelt sich dabei insbesondere um Schiffskörper, Wasserbauten, Bojen oder Fischemetze, jedoch auch Kühl- und Rohrsysteme, welche von Wasser umströmt oder durchflossen werden. Allgemein können alle Materialien, welche mit Wasser in Kontakt treten können, durch das erfindungsgemässe Verfahren vor Bewuchs bzw. Befall durch die vorgenannten Organismen geschützt werden.

Ein besonders bevorzugtes Verfahren ist daher ein Verfahren, worin die Verbindungen der Formel I in Antifouling-Anstrichen eingesetzt werden.

Ein bevorzugtes Verfahren ist auch ein Verfahren, worin die Verbindungen der Formel I in Anstrichen für in Wasser, insbesondere Meerwasser, untergetauchte Objekte eingesetzt werden.

Die Menge an Verbindungen der Formel I, die im erfindungsgemässen Verfahren eingesetzt und den technischen Materialien zugegeben wird, hängt natürlich weitgehend von der jeweiligen Anwendungsart ab und kann deshalb in weiten Grenzen variieren. Die Verbindungen werden je nach Verwendungszweck in den dem Fachmann bekannten Konzentrationsbereichen eingesetzt.

Wegen des breiten Anwendungsspektrums kommen beispielsweise, bezogen auf das jeweils zu behandelnde Substrat, Konzentrationen an Verbindung der Formel I von 0,1 bis 40 Gew.-% in Betracht. Typische Konzentrationen bei der Ausrüstung von Kunststoffen, wie z.B. Weich-PVC-Folien, sind 0,1 bis 10, insbesondere 0,1 bis 5 Gew.-%; 0,1 bis 40, insbesondere 0,5 bis 40, z.B. 10 bis 40 Gew.-% in Farben, wie z.B. Antifoulingfarben.

Ein bevorzugter Anwendungsbereich ist jener in Schutzanstrichstoffen, insbesondere in Antifoulingfarben, denen neben den üblichen Grund- und Zusatzstoffen z.B. 0,5-40 Gew.-%, vorzugsweise 5 bis 40 Gew.-%, bezogen auf die Gesamtmischung, wenigstens einer Verbindung der Formel I, zugesetzt wird.

Die in organischen Lösungsmitteln gelösten Verbindungen der Formel I können in reiner Form oder zusammen mit Trägerstoffen wie z.B. Formulierungshilfsmitteln appliziert werden. Sie können auch in flüssigen Streichmitteln u.ä. suspendiert werden, wobei gegebenenfalls zur Bildung von gleichmässigen Dispersionen Netzmittel die gleichmässige Verteilung des Wirkstoffs fördern können. Es können auch weitere Biocide hinzugefügt werden.

Eine weitere Verwendungsform ist das Einarbeiten in Kunststoffe ,z.B. Polyvinylchloride und deren Co- und Mischpolymerisate, Polyalkylene, z.B. Polyisobutylen, Polyacrylate, Polystyrole, Copolymere davon, Polyurethane oder Polyisocyanate, Polyester, Epoxidharze usw., oder in natürliche oder synthetische Kautschuke.

Das erfindungsgemässe Verfahren kann vorteilhaft in konservierenden Ausrüstungen von Kunststoffen, z.B. Polyamiden, Polyurethanschäumen oder Polyisobutylen, ausgenützt werden. Bei der Verwendung von Weichmachern ist es vorteilhaft, den antimikrobiellen Zusatz dem Kunststoff im Weichmacher gelöst bzw. dispergiert zuzusetzen. Die Kunststoffe mit antimikrobieller Ausrüstung können für Gebrauchsgegenstände aller Art, bei denen eine Wirksamkeit gegen verschiedenste Keime, wie Bakterien und Pilze, erwünscht ist, Verwendung finden, so z.B. in Weich-PVC-Folien, für Fussmatten, Badezimmervorhänge, Sitzgelegenheiten, Trittroste in Schwimmbädern, Wandbespannungen etc.

Die Verbindungen der Formel I können auch in elastomeren Beschichtungen sowie auch in Silikon-Elastomeren und Fluor enthaltenden Polymeren Anwendung finden. Hierbei ist es zweckmässig bevorzugt hochsiedende Lösemittel zu verwenden, die gegebenenfalls im Fertigprodukt verbleiben.

Sinnvoll ist die Verwendung insbesondere bei Kunststoffen oder Polymermaterialien, die als Baumaterialien Verwendung finden und beispielsweise der Witterung ausgesetzt sind oder im Bereich von feuchtenden oder nässenden Bereichen eingesetzt werden. Dabei können beispielhaft Dachmaterialien oder Verkleidungen aus Polyvinylchlorid, Butylkautschuk, chloriertem Polyethylen, Polyisobutylen, Chloropren und Chloroisopren, EPDM sowie PVC-Mischpolymerisaten mit Vinylacetat oder Ethylvinylacetat, Polyacrylnitrilstyrol, gegebenenfalls in Mischung mit faserigen Füllstoffen (gegebenenfalls auch im Verschnitt mit Bitumen), oder geschäumte Polyvinylchloride oder Polystyrole, als Isolationsmaterialien gegen Wärme und Kälte, genannt werden.

In der Praxis werden Wirkstoffe vielfach in Kombination mit anderen Biociden eingesetzt. Auch im erfindungsgemässen Verfahren können weitere Biocide zugesetzt werden. Bei Antifoulingfarben erweisen sich Kombinationen von Produkten oft als vorteilhaft. So können die Phosphoniumchloride der Formel I z.B. in Kombination mit Cu₂O, CuSCN, Zinkoxid, Triorganozinnverbindungen, wie Tributylzinnfluorid, Triphenylzinnchlorid oder Tributylzinnhaltigen Polymeren, metallischem Kupfer oder Triazinen wie z.B. 2-Methylthio-4-t-butylamino-6-cyclopropylamino-s-triazin, allgemein mit solchen Verbindungen, die dem Fachmann als gegen tierischen oder pflanzlichen Bewuchs wirksam bekannt sind, kombiniert werden.

Selbstverständlich können in solchen Kombinationen ausserdem noch weitere Substanzen und Hilfsmittel enthalten sein, wie sie üblicherweise in solchen Zubereitungen mitverwendet werden. Hierzu gehören z.B. anionische, kationische oder nichtionische oberflächenaktive Substanzen, Elektrolyte, Komplexbildner, Lösungsvermittler sowie Farb- und Duftstoffe. Diese Zusätze dienen beispielsweise zur Verbesserung des Netzvermögens, der Härtungsstabilität, zur Viskositätseinstellung und zur Erhöhung der Kältestabilität.

Die Erfindung umfasst auch ein Verfahren, worin mindestens ein weiteres Biocid zugesetzt wird.

Ein besonderer Vorteil der Verbindungen ist, dass ihr breites Wirkungsspektrum erreicht wird, ohne dass die Verbindungen ein Metallatom enthalten. Die Verwendung der Biocide ist, in Vergleich zur Verwendung metallhaltiger Biocide, in ökologischer Hinsicht vorteilhafter.

Die Alkyl-tributylphosphoniumchloride sind, wie eingangs bereits erwähnt, im Gegensatz zu den sonst in nicht-wässrigen Materialien verwendeten entsprechenden Tetrafluoroboratverbindungen, hygroskopisch. Sie können daher ohne Schwierigkeiten in wässrige Systeme eingearbeitet werden. Eine Einarbeitung in lösemittelhaltige Anstriche, Antifoulingfarben, Lacke für den Oberflächenschutz oder in polymere Fomkörper wie Dachfolien, Gummibälle und dergleichen war daher bisher nicht bekannt. Ueberraschenderweise ermöglicht nun jedoch das erfindungsgemässe Verfahren, die Verbindungen in solche nicht-wässrige, organische Systeme einzuarbeiten. Ueberraschend ist vor allem, dass die Biozide trotz ihrer hohen Wasserlöslichkeit nicht, oder nur geringfügig, durch Wasser wieder aus diesen Materialien gelöst werden.

Die nachfolgenden Beispiele erläutern die Erfindung weiter, insbesondere zeigen sie die gute Wirksamkeit der Verbindungen der Formel I in nicht-wässrigen Systemen. In diesen Beispielen ebenso wie in der übrigen Beschreibung und in den Patentansprüchen bedeuten Prozente Gewichtsprozente und Teile Gewichtsteile, soweit nichts anderes angegeben ist.

### Beispiel 1:

Tri-n-butyltetradecylphosphoniumchlorid, wird zu 50 % in Xylol gelöst, und bei der Herstellung einer Antifoulingfarbe auf Basis Vinyl/Colophonium (1:1) und 20 % Füllstoff so, wie es dem Fachmann bekannt ist, verwendet. Die Menge der Phosphoniumverbindung wird so berechnet, dass sie 22 Gew.-% im Trockenfilm ausmacht. Die Antifoulingfarbe wird auf Objektträger, wie sie in der Mikroskopie üblich sind, aufgestrichen. Nach einer Trocknungszeit von 3 Tagen wird eine dieser Proben für eine Woche in künstlichem Meerwasser gelagert. Nach dieser Zeit werden die wassergelagerte Probe und eine nicht im Wasser gelagerte Probe analysiert. Die Analyse erfolgt mittels ³¹P-NMR-Spektroskopie. Hierzu werden die Lackanstriche abgekratzt und die abgekratzte Menge gewogen. Nach Zuwaage von Triphenylphosphin als interner Standard wird deuteriertes Chloroform zugegeben und das Ganze drei Stunden im Ultraschallbad behandelt. Nach Abzentrifugieren der festen Anteile wird von der Lösung ein ³¹P-NMR-Spektrum aufgenommen, wobei 42.000 Scans akkumuliert werden. Korrekturfaktoren für die Peaks werden über eine quantitative "inverse-gated" -Aufnahme bestimmt.
Die Analyse liefert folgende Werte:
Gehalt an Tetradecyltributylphosphoniumchlorid der nicht gewässerten Probe: 20 % Gehalt an Tetradecyltributylphosphoniumchlorid der gewässerten Probe: 22 % Das Analysenergebnis zeigt, dass nach einwöchiger Wasserlagerung die Phosphoniumverbindung nicht ausgelaugt ist. In der nicht gewässerten Probe wird ein niedrigerer als der theoretische %-Gehalt gefunden. Das ist dadurch zu erklären, dass die Lösemittel vor der Wässerung noch nicht vollständig verflüchtigt sind, sich also daraus eine höhere "Verdünnung" ergibt.

### Beispiel 2:

Ein handelsüblicher Holzsiegellack (füllstofffreier Lack "Classic " der Firma Decor GmbH, Hamburg) wird mit Tributyltetradecylphosphoniumchlorid versetzt, so dass im flüssigen Lack 3 % der Verbindung enthalten sind. Der Lack wird wie in Beispiel 1 beschrieben aufgestrichen, gelagert und analysiert.
Die Analyse liefert folgende Werte:
Gehalt an Tributyltetradecylphosphoniumchlorid ohne Wasserlagerung: 11 %
Gehalt an Tributyltetradecylphosphoniumchlorid nach einwöchiger Wasserlagerung: 8 %.

### Beispiel 3:

Die Antifoulingfarbe gemäss Beispiel 1 wird auf Probeplatten aufgestrichen, um die Bewuchsresistenz gegenüber Meeresorganismen zu prüfen. Mit der biozid ausgerüsteten Farbe bestrichene Platten sind nach 12 bzw. 39 Wochen Auslegung in der Nordsee frei von Bewuchs. Platten, die mit der gleichen Lackformulierung, jedoch ohne Biozid, versehen sind, sind bereits nach 12 Wochen Auslegung vollständig überwachsen.

## Patentansprüche

1. Verfahren zum Stabilisieren von nicht-wässrigen und nicht-wasserlöslichen technischen Materialien gegen Befall durch Schadorganismen dadurch gekennzeichnet, dass man Phosphoniumchloride der Formel I 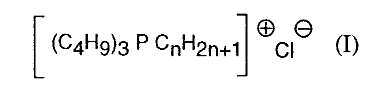 worin n für eine Zahl von 8 - 16 steht, in das zu stabilisierende System einarbeitet.

2. Verfahren nach Anspruch 1, worin die Verbindung der Formel I in einer Menge von 0,1 bis 40 Gew.-%, bezogen auf das technische Material eingesetzt wird.

3. Verfahren nach Anspruch 2, worin die Verbindung der Formel I in einer Menge von 0,5 bis 40 Gew.-%, bezogen auf das technische Material eingesetzt wird.

4. Verfahren nach Anspruch 1, worin neben mindestens einer Verbindung der Formel I mindestens ein weiteres Biozid zugesetzt wird.

5. Verfahren nach Anspruch 1, worin n für eine Zahl von 12-14 steht.

6. Verfahren nach Anspruch 1, worin das nicht-wässrige System ein Kunststoff oder eine Anstrichfarbe, bzw. ein Lack ist.

7. Verfahren nach Anspruch 6, worin die Farbe eine Aussenanstrichsfarbe ist.

8. Verfahren nach Anspruch 6, worin die Farbe eine Antifouling-Farbe ist.

9. Verfahren nach Anspruch 6, worin die Farbe eine Farbe für Anstriche für in Wasser untergetauchte Objekte ist.

10. Verfahren nach Anspruch 8, worin der Antifoulingfarbe 0,5-40 Gew.-% der Verbindung der Formel I zugebeben werden.

11. Verfahren nach Anspruch 1, worin die Verbindung der Formel I in einem organischen Lösemittel gelöst in das zu stabilisierende Material eingearbeitet wird.

12. Verfahren nach Anspruch 11, worin als Lösemittel aromatische Kohlenwasserstoffe, hochsiedende Mineralöle, Ketone, Ester oder Polyglycole verwendet werden.

13. Verfahren nach Anspruch 12, worin als Lösemittel Toluol oder Xylol, insbesondere Toluol, verwendet wird.

14. Verfahren nach Anspruch 11, worin die Verbindungen der Formel I zu 40-70 % im organischen Lösemittel gelöst sind.
